# EUROPÄISCHE PATENTSCHRIFT

(11) **EP 2 036 630 B1**
(45) Veröffentlichungstag und Bekanntmachung des Hinweises auf die Patenterteilung: **16.01.2013**
(21) Anmeldenummer: 07018133.4
(22) Anmeldetag: 14.09.2007
(51) Int. Cl.: B21D 28/16, B21D 37/18

(54) **Verfahren und Vorrichtung zum Schmieren von Werkzeug und Werkstück beim Schneiden**
Method and device for lubricating a tool and workpiece when cutting
Procédé et dispositif destinés à la lubrification de l' outil et de la pièce lors de la coupe

(43) Veröffentlichungstag der Anmeldung: 18.03.2009
(73) Patentinhaber: Feintool Intellectual Property AG, 3250 Lyss (CH)
(72) Erfinder: Schlatter, Ulrich, Dipl.-Ing., 3250 Lyss (CH)
(74) Vertreter: Hannig, Wolf-Dieter

(56) Entgegenhaltungen:
- EP-A- 1 707 285
- WO-A-02/38695
- DE-A1- 1 752 239
- JP-A- 3 268 808
- JP-A- 4 294 831
- JP-A- 57 001 527
- JP-A- 2007 007 692
- JP-A- 2007 029 992

## Beschreibung

Die Erfindung betrifft ein Verfahren zum Schmieren von Werkzeug und Werkstück gemäß dem Oberbegriff von Anspruch 1.

Die Erfindung betrifft ferner eine Vorrichtung zum Schmieren von Werkzeug und Werkstück gemäß dem Oberbegriff von Anspruch 10.

### Stand der Technik

Es ist bekannt, dass das Feinschneiden wegen seines hohen Verschleißes nicht ohne Schmieröl auskommt. Ein Feinschneiden ohne Schmieröl führt besonders bei dickeren Teilen schon nach wenigen Hüben zum Verschweißen des Schneidstempels mit dem Teilewerkstoff. Daneben tritt bei dünnen Teilen eine schnelle Werkzeugabstumpfung auf.

Wie aus "Umformen und Feinschneiden- Handbuch für Verfahren, Stahlwerkstoffe, Teilegestaltung" (R.A.Schmidt, Carl-Hanser-Verlag 2007, München, Wien, S. 241-243,) bekannt, erreicht die Verschleißbeanspruchung des Schneidstempels, der Schneidplatte, der Ringzacke und des Innenformstempels im Feinschneidwerkzeug eine erhebliche Größenordnung und die Neigung zu Kaltverschweißungen zwischen Stempel und Werkstück nimmt insbesondere bei Werkstückdicken oberhalb von 10 mm stark zu.
Um den Verschleiß und der Kaltverschweißung entgegenzuwirken, schlägt dieser Stand der Technik vor, das Werkstück oder das Band ober- und unterseitig mit einem Ölfilm ausreichender Dicke zu versehen. Das geölte Band wird in das geöffnete Werkzeug eingeschoben und beim Schließen des Werkzeugs zwischen Werkzeugober- und -unterteil eingespannt. Das auf der Oberseite und Unterseite des Bands befindliche Öl wird einerseits durch die Führungsplatte, den Schneidstempel und den Auswerfer des Schneidwerkzeugs und andererseits durch die Schneidplatte, den Auswerfer und den Innenformstempel abgepresst und in Schmiertaschen gedrängt, die bandoberseitig durch eine Anfasung an der Führungsplatte und des Ausstossers sowie bandunterseitig durch eine Anfasung am Auswerfer gebildet wird.
Trotz all dieser Maßnahmen ist es ein Problem geblieben, genügend Schmieröl beim Schneiden in die Umformzone zu bringen, so dass sich das Feinschneiden von Teilen mit Dicken oberhalb von 10mm und komplizierter Teilegeometrie bisher nicht durchsetzen konnte.

Aus der DE 1 752 239 ist es der Weiteren bekannt, eine Matrize aus porösem Hartmetall einzusetzen. In die Poren der Matrize lagert sich Schmiermittel ab. Dies soll dazu beitragen, dass der Schmierfilm beim Schneiden nicht abreißt. Diese bekannte Lösung vermag nicht sicherzustellen, dass das Schmiermittel in die Umformzone gelangen kann.

Aus der JP 03 268 808 A ist eim Werkzeug zum plastischen Bearbeiten von Metall bekannt. Dieses Werkzeug besitzt eine Vielzahl von Vertiefungen ein die das Metall beim plastischen Bearbeiten eindringt und Öl, das sich in den Vertiefungen befinfet herauspresst. Dies soll zu einer verbesserten ober fläche am nearbeitelen Metall fähren.

### Aufgabenstellung

Bei diesem Stand der Technik liegt der Erfindung die Aufgabe zugrunde, ein Verfahren und eine Vorrichtung zum Schmieren eines Werkzeugs und Werkstücks beim Schneiden und Umformen, insbesondere Feinschneiden eines Werkstücks derart weiterzuentwickeln, dass das Feinschneiden dickerer Teile prozesssicher in hoher Qualität unter gleichzeitiger Erhöhung der Standzeiten der Werkzeuge durch Schmieren der aktiven Oberflächen bis in die Umformzone hinein reproduzierbar beherrscht wird, ohne dass der zugeführte Schmiermittelfilm abreißt.

Diese Aufgabe wird durch ein Verfahren der eingangs genannten Gattung mit den Merkmalen des Anspruchs 1 sowie durch eine Vorrichtung mit den Merkmalen des Anspruchs 10 gelöst.

Vorteilhafte Ausgestaltungen des Verfahrens und des Werkzeugs sind den Unteransprüchen entnehmbar.

Die erfindungsgemäße Lösung zeichnet sich dadurch aus, dass die Schichtdicke des Schneidölfilms auf dem Werkstück durch eine Öl- und Schichtdickenkontrolle in Abhängigkeit von Werkstückdicke, Werkstückmaterial und - geometrie eingestellt wird, wobei von dem bevorrateten Schneidöl eine erste Teilmenge von einer in einer Funktionsfläche von Schneidstempel und Schneidplatte eingebrachten Mikro-Oberflächenstruktur gespeichert und im Zusammenwirken aneinander vorbeibewegender Funktionsflächen zu einem quasistationären Schneidölfilm bei geschlossenem Werkzeug gleichmäßig auf den Funktionsflächen verteilt wird und dass eine zweite Teilmenge an Schneidöl über die jeweiligen Wirkfugen an die aktiven Oberflächen von Schneidstempel und Werkstück in der Umformzone transportiert wird.

Die Schmierung der aktiven Oberflächen von Schneidstempel bzw. Innenformstempel und Werkstück lässt sich darüber hinaus noch dadurch verbessern, dass den Wirkfugen über einen im Schneidstempel, Auswerfer und Innenformstempel verlaufenden Kanal zusätzlich eine unter steuerbaren Druck stehende Menge an Feinschneidöl permanent zuführt wird, von dem eine erste Teilmenge in einer Funktionsfläche von Schneidstempel und Schneidplatte eingebrachten Mikro-Oberflächenstruktur gespeichert und im Zusammenwirken aneinander vorbeibewegender Funktionsflächen von Schneidstempel und Führungsplatte, Auswerfer und Schneidplatte sowie Ausstosser und Innenformstempel zu einem quasistationären Schneidölfilm bei geschlossenem Werkzeug gleichmäßig über die Funktionsflächen verteilt und eine zweite Teilmenge über die jeweilige Wirkfuge an die aktiven Oberflächen am Schneidstempel und Werkstück in der Umformzone transportiert wird.

Je nach der Werkstückdicke, -geometrie und -material der feinzuschneidenen Teile wird die Größe bzw. Dimensionierung der Anfasung an der Führungsplatte, am Auswerfer und Ausstosser bzw. der Druck für die Zuführung des Schneidöls so gewählt, dass eine ausreichende Menge an Schneidöls in den Öltaschen bzw. an den Austrittsöffnungen zur Verfügung steht. Dies bedeutet anders ausgedrückt, dass die Menge des Schneidöls mit steigender Werkstückdicke entsprechend zunehmen muss und die Anfasung oder der Öldruck dementsprechend größer zu wählen ist.

Die Menge des aus den Öltaschen in die Umformzone zugeführten Öls wird durch die in der Mikro-Oberflächenstruktur speicherbare Ölmenge bestimmt, die von der Geometrie, Form und Tiefe der Mikro-Oberflächenstruktur in den Funktionsflächen abhängt. Damit eine ausreichende Menge an Schmieröl bis in die Umformzone gelangt, wird das Speichervolumen der Mikro-Oberflächenstruktur für Öl auf die Werkstückdicke, -material und -geometrie entsprechend abgestimmt.

Die Mikro-Oberflächenstruktur in den Funktionsflächen von Schneid- und Innenformstempel sowie Schneidplatte und Auswerfer besteht aus Vertiefungen und/oder Grübchen und/oder Bohrungen im µm-Bereich, die durch eine präzise nacharbeitungsfreie Laserbearbeitung oder Schleifen oder Fräsen erzeugt werden. Diese Vertiefungen und/oder Grübchen und/oder Bohrungen füllen sich mit Schneidöl, das dort infolge der aneinander vorbeilaufenden Funktionsflächen verbleibt und den durch an den Reibstellen verursachten hohen Temperaturen ausgesetzt ist, so dass sich ein Schmierfilm ausbilden kann.

Das erfindungsgemäße Verfahren ermöglicht es, das Feinschneiden auch auf Werkstücke oder Bänder aus Stahl oder Aluminium mit Dicken oberhalb von 5 mm wirtschaftlich anzuwenden und eine hohe Prozesssicherheit und reproduzierbare Präzision bei der Herstellung der Teile zu erreichen.

Die Funktionsflächen, d.h. die Mantelfläche von Schneid- und Innenformstempel sowie die Führungsfläche von Schneidplatte und Auswerfer, sind mit Vertiefungen und/oder Grübchen und/oder Bohrungen nahezu identischer Geometrie, Form und Tiefe belegt, so dass sichergestellt werden kann, dass das in den Vertiefungen und/oder Grübchen und/oder Bohrungen gesammelte Öl beim Schneiden nicht mehr abgestreift wird. Die darüber hinaus zugeführte Menge an Feinschneidöl wird in die Umformzone transportiert.
Die Umformzone wird dadurch mit einer ausreichenden Menge von mit Additiven versetztes Feinschneidöl versorgt, so dass die Neigung zu Kaltverschweißungen an den aktiven Oberflächen zwischen Schneidstempel und Werkstück deutlich herabgesetzt und der Verschleiß der Feinschneidwerkzeuge signifikant reduziert werden kann, was den Vorteil einer wesentlich längeren Standzeit der Werkzeuge mit sich bringt.

Die Vertiefungen und/oder langgestreckten Grübchen und/oder Bohrungen bedecken die Funktionsflächen in einer regelmäßigen Anordnung, die aus über- oder untereinander angeordneten, horizontalen, nicht in Verbindung stehenden Reihen von Vertiefungen und/oder Grübchen und/oder Bohrungen gebildet ist, wobei die Vertiefungen und/oder Grübchen und/oder Bohrungen gegenüberliegender Reihen auf Lücke zueinander versetzt angeordnet sind, so dass eine äußerst dichte, gleichmäßige Belegung der Funktionsflächen mit den Vertiefungen und/oder Grübchen und/oder Bohrungen erreicht wird. Dies hat den Vorteil, dass das Schmiermittel einen gleichmäßigen quasistationären Schneidölfilm auf den Funktionsflächen von Schneid- und Innenformstempel, Schneidplatte und Auswerfer bildet, was den Verschleiß der Aktivelemente im Werkzeug weiterhin senkt.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an zwei Ausführungsbeispiele näher erläutert werden.
Es zeigt

Fig. 1 eine schematische Darstellung des prinzipiellen Aufbaus eines Feinschneidwerkzeuges nach dem Stand der Technik,

Fig. 2 eine schematische Darstellung der Schmierung im Feinschneidwerkzeug nach dem Stand der Technik,

Fig. 3 eine perspektivische Ansicht der Mikro-Oberflächenstruktur auf den Funktionsflächen der erfindungsgemäßen Vorrichtung,

Fig. 4a, 4b und 4c weitere Varianten der Mikro-Oberflächenstruktur,

Fig. 5a bis 5c eine schematische Darstellung des Ablaufs des erfindungsgemäßen Verfahren in der Wirkfuge der erfindungsgemäßen Vorrichtung.

Fig. 6 einen Schnitt durch eine weitere erfindungsgemäße Vorrichtung mit einer zusätzlichen Schneidölzufuhr,

Fig. 7 eine vergrößerte Darstellung des Oberteils der erfindungsgemäßen Vorrichtung,

Fig. 8 eine vergrößerte Darstellung der Unterseite der erfindungsgemäßen Vorrichtung,

Fig. 9a, 9b und 9c Einzelheiten A, B und C der Fig. 7 und

Fig. 10a, 10b und 10c Einzelheiten D, E und F der Fig. 8

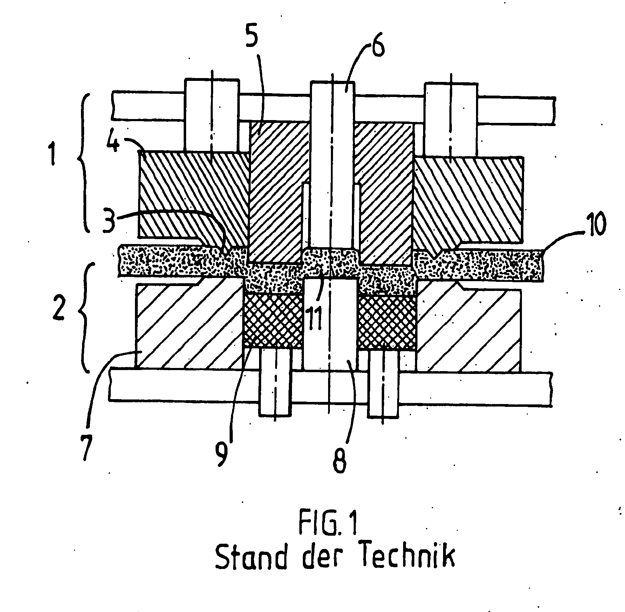

Die Fig. 1 zeigt den grundsätzlichen Aufbau eines Feinschneidwerkzeugs nach dem Stand der Technik im geschlossenen Zustand.
Das Feinschneidwerkzeug besitzt ein Oberteil 1 und Unterteil 2. Zum Oberteil 1 des Feinschneidwerkzeugs gehört eine Ringzacke 3 aufweisende Führungsplatte 4, ein Schneidstempel 5, der in der Führungsplatte 4 geführt ist, und ein Ausstosser 6. Das Unterteil 3 ist gebildet aus einer Schneidplatte 7, einem Innenform- oder Lochstempel 8 und einem Auswerfer 9. Der Bandstreifen 10 aus legiertem rostfreien Stahl mit einer Dicke von 12 mm, aus dem nach dem erfindungsgemäßen Verfahren ein Feinschnittteil 11, beispielsweise ein Anschlussflansch, aus Bandstahl, gefertigt werden soll, ist nach dem gezeigten Stellungszustand des Werkzeugs zwischen Führungsplatte 4 und Schneidplatte 7 eingeklemmt und die Ringzacke 3 ist bereits in den Bandstreifen 10 eingedrungen, wodurch der Werkstoff infolge der einwirkenden Ringzackenkraft am Nachfließen während des Schneidens gehindert wird. Die Schneidplatte 7 und der Innenformabfall 12 haben das Feinschnittteil 11 etwa mit halber Werkstückdicke geschnitten. Die Verschleißbeanspruchung von Schneidstempel 5, Ringzacke 3, Schneidplatte 7 und Innenformstempel 8 ist entsprechend hoch, so dass eine ausreichende Schmierung der Reibstellen mittels Schneidöl notwendig ist, um das Feinschneiden durchführen zu können.

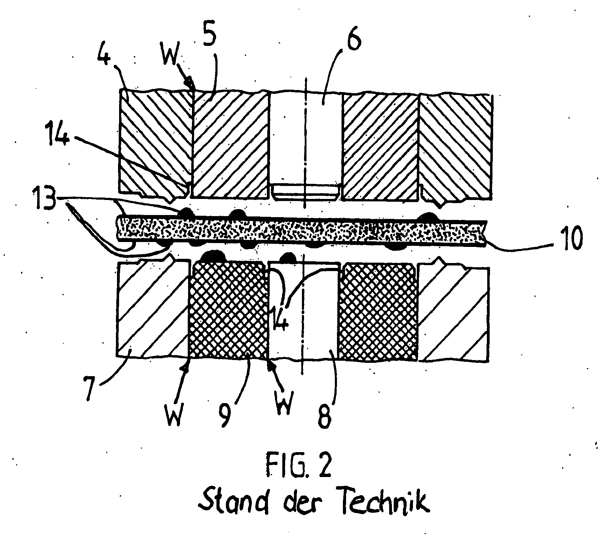

Die Fig. 2 zeigt schematisch die aus dem Stand der Technik her bekannten Maßnahmen zur Sicherstellung der Schmierung eines Feinschneidwerkzeuges im geöffneten Werkzeugstand.
Grundlegende Voraussetzung für die Schmierung im Feinschneidwerkzeug ist eine gleichmäßige Beschichtung des bei geöffnetem Werkzeug einlaufenden Bandstreifens mit dem Schneidöl 13. Um eine gleichmäßige Beschichtung oder das Vorhandensein der Ölbeschichtung des Bandes zu gewährleisten, kann zweckmäßigerweise am einlaufenden Band eine Öl- und Schichtdickenkontrolle durchgeführt werden.
Das hochviskose Schneidöl 13 enthält Netzmittel und Additive, die bei hohen Drücken und Temperaturen wie sie beispielsweise an den Reibstellen im Feinschneidwerkzeug auftreten, mit den aktiven Oberflächen Passivierungsschichten bilden, die der Neigung zum Kaltverschweißen entgegenwirken.

Beim Schließen des Werkzeuges wird der an der Ober- und Unterseite mit Schneidöl 13 beschichtete Bandstreifen 10 zwischen Führungsplatte 4 und Schneidplatte 7 eingeklemmt. Die Führungsplatte 4, der Schneidstempel 5 und der Ausstosser 6 drücken auf die Oberseite des Bandstreifens 10 und die Schneidplatte 7, der Auswerfer 9 und der Innenformstempel 8 auf die Unterseite des Bandstreifens, wodurch das Schneidöl 13 von den Oberflächen abgepresst und in Öltaschen 14 abgedrängt wird, die durch Anfasungen 15 an der Führungsplatte 4 und am Ausstosser 6 des Oberteils 1 und durch eine Anfasung 16 am Auswerfer 9 des Unterteils 2 des Feinschneidwerkzeugs ausgebildet sind. Das von der Oberfläche des Bandstreifens 10 abgedrängte Schneidöl 13 sammelt sich in den Öltaschen 14 und kann von der Oberseite des Bandstreifens 10 aus gesehen entlang der zwischen Führungsplatte 4 und Schneidstempel 5 sowie Schneidstempel 5 und Ausstosser 6 gebildeten Wirkfugen W bei Bewegung des Schneidstempels 5 in Schneidrichtung in das Werkstück eindringen und die Funktionsflächen 17 und 18, d.h. die Mantelfläche des Schneidstempels 5 und die Führungsfläche der Führungsplatte 4 entsprechend schmieren. Die Schmierung des Werkzeugs von der Bandunterseite her erfolgt durch das Öl, das sich in der am Auswerfer 9 angeordneten Öltasche 14 gesammelt hat. Das Schneidöl wird bei der Bewegung des Auswerfers 9 in Schneidrichtung mitgenommen und gelangt über die zwischen Schneidplatte 7 und Auswerfer 9 gebildete Wirkfuge W an die Funktionsflächen 19 und 20, d.h. einerseits die äußere Mantelfläche des Auswerfers 9 und die Führungsfläche der Schneidplatte 7 und anderseits an die innere Mantelfläche des Auswerfers 9 und Mantelfläche des Innenformstempels 8.

Es ist eine gesicherte Erkenntnis, dass beim Feinschneiden die Neigung zur Kaltverschweißung zwischen Schneidstempel 5 und Feinschneidteil 11 mit zunehmender Werkstoffdicke steigt. Bei Überschreiten einer Werkstückdicke von 10 mm ist das Feinschneiden im Allgemeinen nicht mehr prozesssicher und wird wegen des unverhältnismäßig hohen Nachbearbeitungsaufwands zunehmend unwirtschaftlich. Die Ursachen für diese Nachteile liegen darin begründet, dass bedingt durch die hohen Pressdrücke von das Schneidöl aus den Wirkfugen herausgedrückt wird und somit trotz all dieser bekannten Schmiermaßnahmen ein Abreißen des Schneidölflusses mit zunehmender Teiledicke nicht verhindert werden kann.

### Beispiel 1

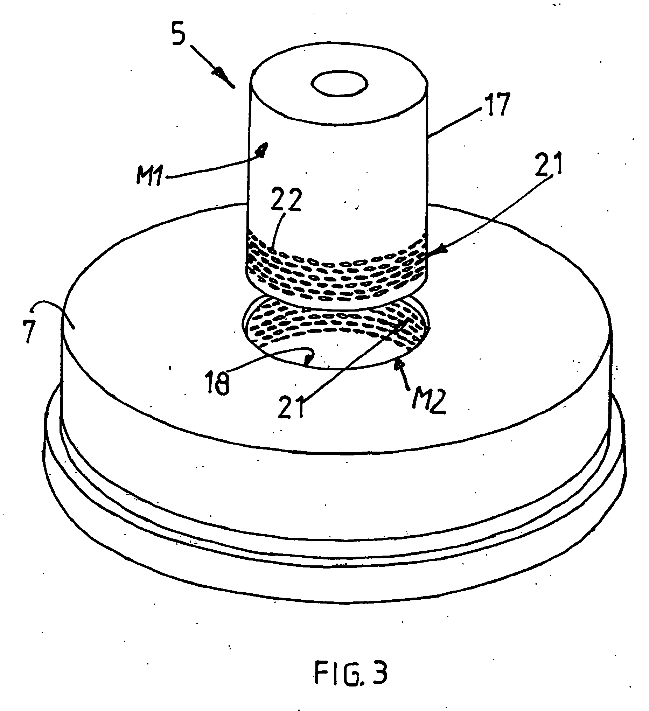

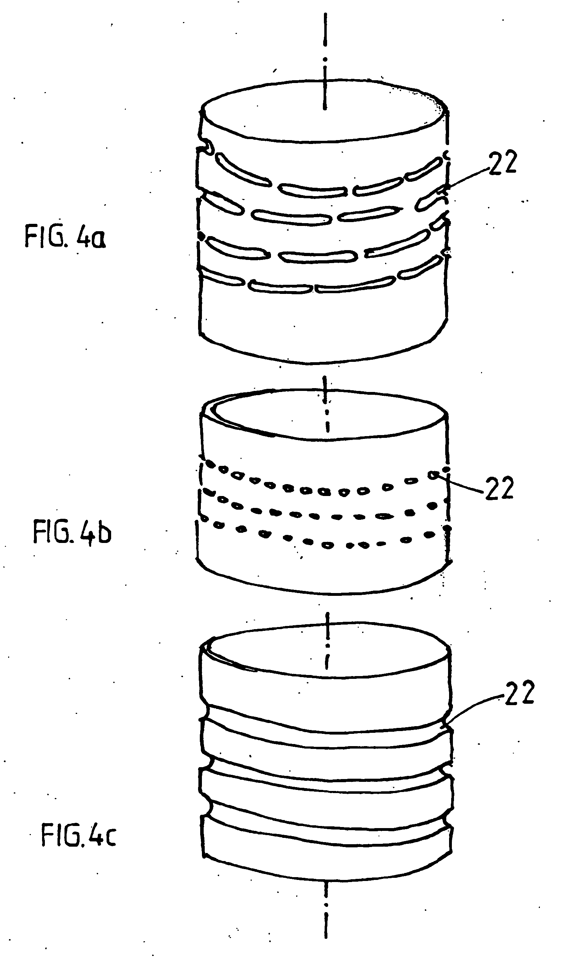

Die erfindungsgemäße Vorrichtung im Beispiel 1 entspricht im Wesentlichen dem Aufbau der Vorrichtung, die gemäß Fig. 1 beschrieben wurde. Die Fig. 3 zeigt die erfindungsgemäße Mikro-Oberflächenstruktur 21 am Beispiel der Funktionsfläche 17 und 18 des Schneidstempels 5 und der Schneidplatte 7. Die Mantelfläche M1 des Schneidstempels 5 und die Mantelfläche M2 der Schneidplatte 7 ist poliert und mit beispielsweise Titankarbonitrid beschichtet. Eine Vielzahl mittels Laserbearbeitung oder anderer geeigneter Bearbeitungsverfahren wie Schleifen, Fräsen o. dgl. erzeugter Vertiefungen 22 bedeckt die Mantelflächen M1 und M2. Die durchschnittliche Tiefe der Vertiefungen 22 beträgt etwa 0,05 mm. Die Vertiefungen 22 verlaufen in regelmäßigen voneinander beanstandeten horizontalen Reihen, die senkrecht zur Schneidrichtung SR angeordnet sind. Die Bedeckung der Funktionsflächen 17 und 18 mit den Vertiefungen ist gleichmäßig.
Diese Vertiefungen 22 können eine unterschiedliche Geometrie und Form besitzen. So können beispielsweise langgestreckte Rillen, Grübchen, Nuten, vollständig umlaufende Rillen oder auch Bohrungen in die Funktionsflächen eingebracht werden. Dabei muss nur sichergestellt sein, dass über- oder untereinander liegende Reihen von Vertiefungen 22 keine in Schneidrichtung verlaufende Verbindung untereinander aufweisen. Beispiele von Varianten von Vertiefungen 2 sind in Fig. 4 gezeigt.

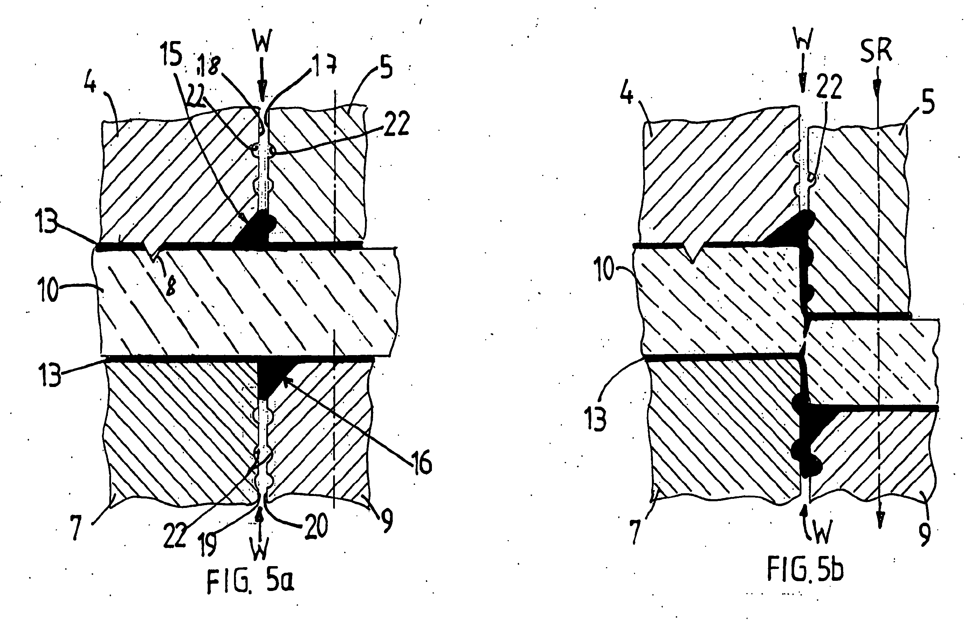

Der Ablauf des erfindungsgemäßen Verfahrens wird anhand der Fig. 5a bis 5c beschrieben. In Fig. 5a ist der Bandstreifen 10 zwischen Führungsplatte 4 und Schneidplatte 7 eingeklemmt. Das von der Bandoberseite des Bandstreifens 10 abgepresste Schneidöl 13 füllt die Öltaschen 14, die sich an der Führungsplatte 4 und dem Auswerfer 9 befinden. Die in die Funktionsflächen 17 und 18 von Schneidstempel 5 und Führungsplatte 4 eingebrachten Vertiefungen 22 sind noch nicht mit Feinschneidöl 13 aus den Öltaschen 14 gefüllt. Sobald der Schneidstempel 5 sich in Schneidrichtung SR weiter bewegt, laufen die Vertiefungen 22 an der Öltasche 14 vorbei und eine entsprechende Menge vom Schneidöl wird aus den Öltaschen an der Werkstückoberseite durch die Geometrie und Form der Oberflächenstruktur in der Mantelfläche des Schneidstempels während seiner Abwärtsbewegung in Schneidrichtung abgeschert und entnommen.
Die Vertiefungen füllen sich mit Schneidöl 13 aus dem Vorrat der Öltasche 14, das in Fig. 5b durch eine vollständige Schwärzung der betroffenen Vertiefungen 22 verdeutlich ist. Die entnommene und in der Oberflächenstruktur gespeicherte Ölmenge wird mitgenommen und beim Vorbeibewegen der Funktionsflächen gleichmäßig auf diese verteilt, wodurch sich ein quasistationärer Schneidölfilm auf den Funktionsflächen 17 und 18 ausbildet.

Synchron zum Vorwärtsbewegen des Schneidstempels 5 bewegt sich der Auswerfer 9 in Schneidrichtung SR. Diejenigen Vertiefungen 22 in der Funktionsfläche 20 der Schneidplatte 7, an denen sich die mit Schneidöl von der Bandunterseite gefüllte Öltasche 14 am Auswerfer 9 vorbeibewegt, füllen sich mit Schneidöl. Die in der Oberflächenstruktur gespeicherte Schneidölmenge wird ebenso beim Vorbeibewegen der Funktionsflächen 19 und 20 gleichmäßig als quasistationärer Schneidölfilm auf den Funktionsflächen verteilt.

Die Wirkfugen W zwischen Führungsplatte 4 und Schneidstempel 5 einerseits und Schneidplatte 7 und Auswerfer 9 andererseits hat sich vollständig mit Schneidöl gefüllt, so dass Schneidöl 13 aus der Öltasche bis an die aktiven Oberflächen in der Umformzone gelangen kann.

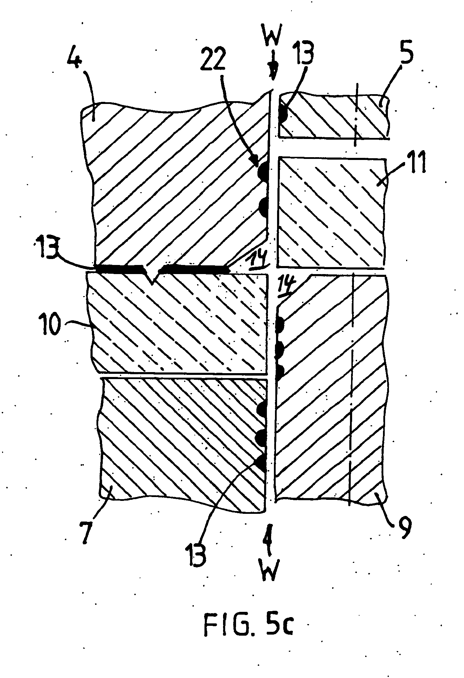

Nach dem Durchschneiden des Bandstreifens 10 bewegen sich der Schneidstempel 5 und der Ausstosser 9 entgegen der Schneidrichtung SR. Die Funktionsfläche 19 des Ausstossers läuft an den mit Öl gefüllten Vertiefungen 22 in der Funktionsfläche 20 der Schneidplatte 20 vorbei und wird somit entsprechend geschmiert (siehe Fig. 5c). Die Vertiefungen 22 in den jeweiligen Funktionsflächen 17 und 18 bzw. 19 und 20 bleiben sowohl in als auch entgegen der Schneidrichtung von den entsprechenden Mantelflächen des Schneidstempels 5 bzw. Führungsplatte 4 oder Schneidplatte 7 bzw. Auswerfer 9 weitgehend abgedeckt, so dass das in der Vertiefungen 22 der Mikro-Oberflächenstruktur gespeicherte Öl trotz Bewegung von Schneidstempel 5 und Auswerfer 9 quasistationär in den Vertiefungen 22 verbleibt.

Die geometrisch gleichmäßige Verteilung der Vertiefungen 22 auf den Funktionsflächen 17 bzw. 18 und 19 bzw. 20 verstärkt den Effekt der Vergleichmäßigung der Schmierung der Funktionsflächen. Zur weiteren Erhöhung der Wirkung der Schmierung trägt ferner dazu bei, dass die an der Reibstellen auftretende hohe Temperatur zur Umsetzung der im Schneidöl vorhandenen Additive wie Chlor, Phosphate oder Sulfonate die Bildung einer Passivierungsschicht begünstigt, die letztendlich zu einer Herabsetzung der Kaltschweißneigung, besonders bei Werkstückdicken oberhalb von 10 mm führt.

Durch die Dimensionierung, d.h. Größe der Anfasung 15 bzw. 16 an der Führungsplatte 4 und am Auswerfer 9, lässt sich das Fassungsvermögen der Öltaschen 14 entsprechend verändern. Eine große Werkstückdicken erfordert eine größere an die Reibstellen zuzuführende Schneidölmenge, so dass durch die Wahl einer größeren Anfasung 15 bzw. 16 auch die zu bevorratende Schneidölmenge in der Öltasche 14 erhöht werden kann.
Die Menge an Schneidöl, die in die Umformzone transportiert wird, lässt sich durch die Form, Geometrie und Tiefe der Mikro-Oberflächenstruktur so bemessen, dass dickere Werkstücke prozesssicher feingeschnitten werden können.

Um die notwendige Menge an Schneidöl für die erfindungsgemäße Schmierung bereitzustellen, hat es sich als zweckmäßig erwiesen, die Beschichtungsdicke bzw. -menge des Bandstreifens mit Schneidöl durch eine Öl- und Schichtdickenkontrolle vor Einlauf in das Feinschneidwerkzeug zu kontrollieren. Dies ermöglicht, die Schichtdicke des Schneidölfilms auf dem Werkstück auf die Schmiererfordernisse in Abhängigkeit von Werkstückdicke, Werkstückmaterial und -geometrie anzupassen.

### Beispiel 2

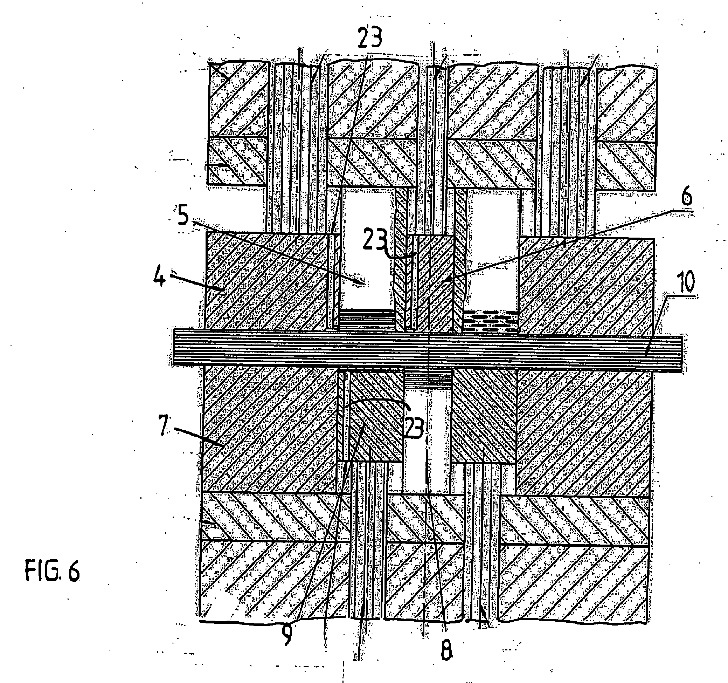

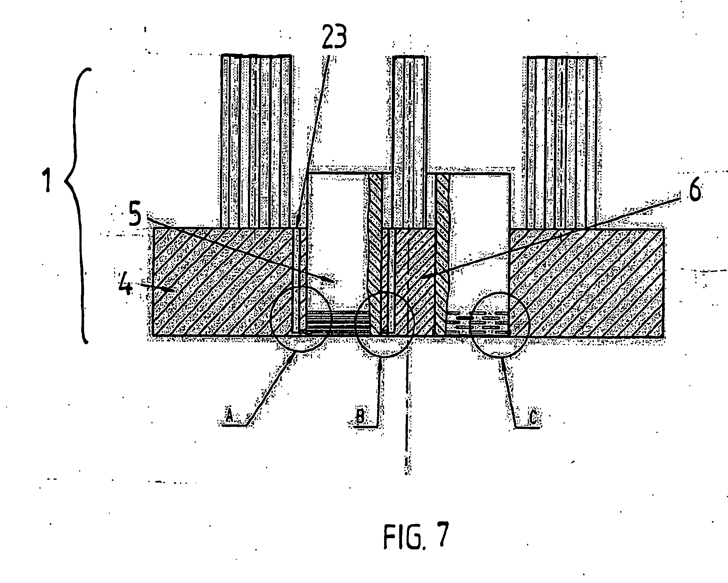

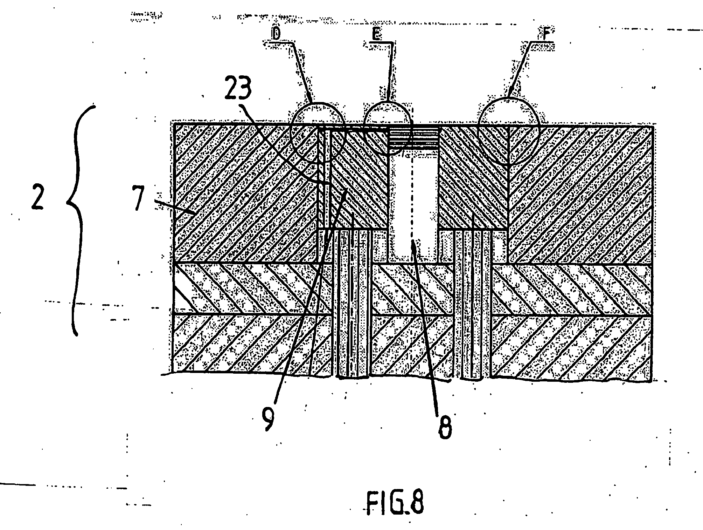

Die Fig. 6 bis 8 zeigen eine weitere Variante der erfindungsgemäßen Vorrichtung, die in ihrem Grundaufbau dem Aufbau des in Fig. 1 beschriebenen Werkzeugs entspricht. Zusätzlich zu den Öltaschen 14 an der Führungsplatte 4 und dem Auswerfer 9 besitzt die Führungsplatte 4, der Auswerfer 9 und der Ausstosser 6 jeweils einen Kanal 23 zum Zuführen von weiterem Schneidöl 13 über die Wirkfugen zwischen Führungsplatte 4 und Schneidstempel 5, Schneidstempel 5 und Ausstosser 6 sowie Schneidplatte 7 und Auswerfer 9 in die entsprechende Mikro-Oberflächenstruktur. Der Kanal 23 ist mit einer nicht dargestellten Zuleitung für den Anschluss einer Druckpumpe zum Unterdrucksetzen des zuzuführenden Schneidöls 13 verbunden. Der in der Führungsplatte 4, im Auswerfer 9 und Ausstosser 6 in Schneidrichtung SR verlaufende Kanal 23 geht in einen senkrecht zur Schneidrichtung verlaufenden Bereich 24 mit einer zur Wirkfuge hin sich erweiternden Öffnung 25 über, durch die unter permanenten Druck gehaltenes Schneidöl 13 in die Wirkfugen gefördert werden kann.

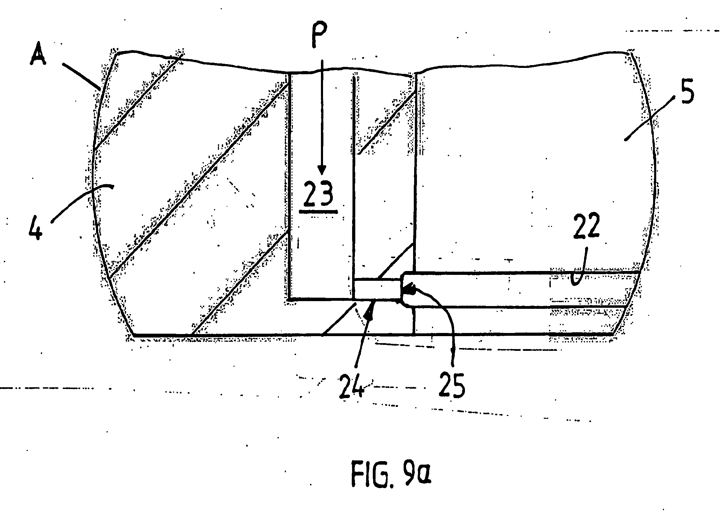

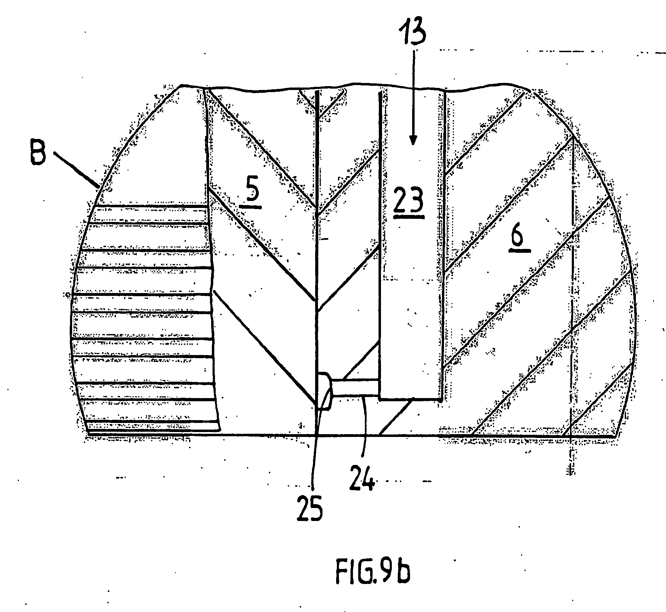

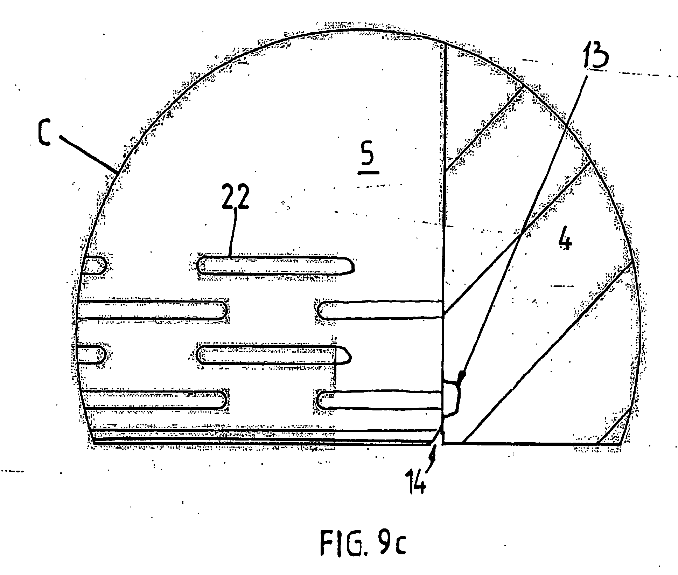

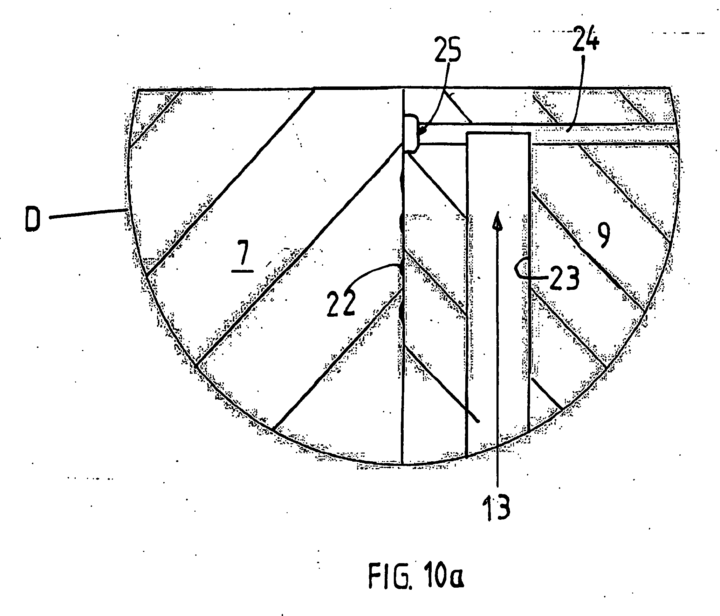

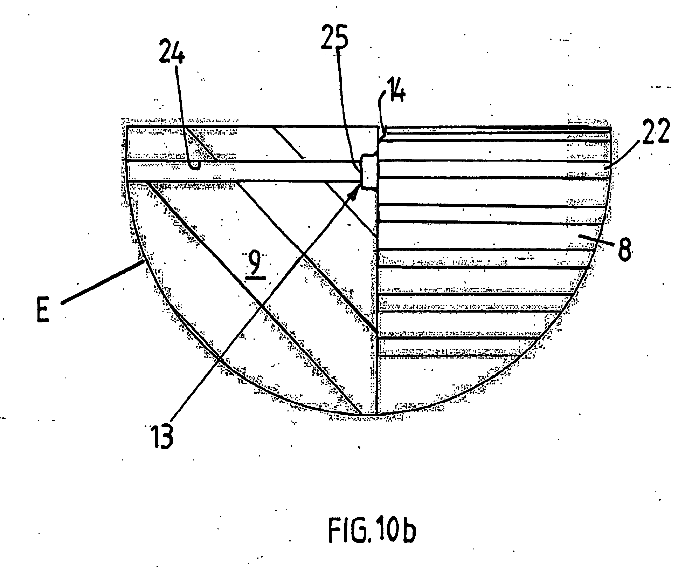

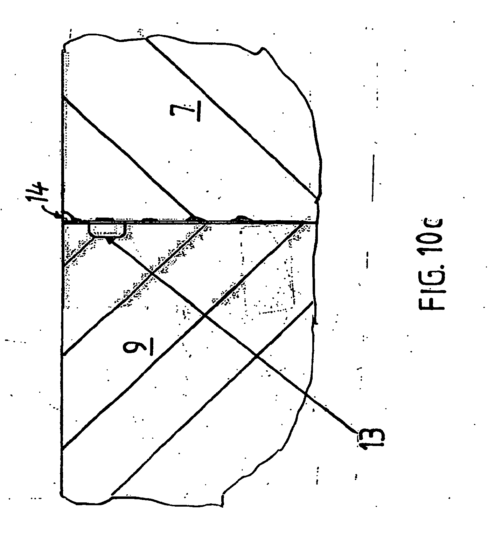

In den Fig. 9a bis 9c und 10a bis 10c sind Einzelheiten der Schneidölzufuhr gezeigt. Es ist deutlich, dass die Öffnung 25 des Kanals 23 auf die nahe der Schneidkante des Stempels gelegene Vertiefung 22 in der Mantelfläche des Schneidstempels 4 zu liegen kommt, so dass das unter Druck stehende Schneidöl 13 die Vertiefung 22 vollständig ausfüllen kann. Bei Bewegung des Schneidstempels 5 in Schneidrichtung SR bewegen die sich darüber liegenden Vertiefungen 22 zwangsläufig an der Öffnung 25 des Kanals 23 vorbei und werden ebenso mit Schneidöl 13 gefüllt. Die Wirkfuge W zwischen Führungsplatte 4 und Schneidstempel 5 wird gleichmäßig mit Schneidöl 13 gefüllt und bei Bewegung des Schneidstempels 5 gleichmäßig auf der Funktionsfläche zwischen Führungsplatte 4 und Schneidstempel 5 verteilt. Über die Öffnung 25 des Kanals 23 im Auswerfer 9 gelangt das unter Druck stehende Schneidöl 13 in die Vertiefungen 22 der Schneidplatte 7. Die Wirkfuge W zwischen Schneidplatte 7 und Auswerfer 9 füllt sich mit Schneidöl, das bei Bewegung des Auswerfers 9 gleichmäßig auf die Funktionsflächen 19 und 20 verteilt wird.
Über die Wirkfuge W gelangt das Schneidöl 13 bis an die aktiven Oberflächen in der Umformzone, d. h. an die Schneidstelle von Schneidstempel und Werkstück.

### Bezugszeichenliste

- Oberteil des Feinschneidwerkzeugs: 1
- Unterteil des Feinschneidwerkzeugs: 2
- Ringzacke: 3
- Führungsplatte: 4
- Schneidstempel: 5
- Ausstosser: 6
- Schneidplatte (Matrize): 7
- Innenform- oder Lochstempel: 8
- Auswerfer: 9
- Bandstreifen: 10
- Feinschnittteil: 11
- Innenformabfall: 12
- Schneidöl: 13
- Öltaschen: 14
- Anfasungen: 15, 16
- Funktionsflächen von 4 und 5: 17, 18
- Funktionsflächen von 6 und 7: 19, 20
- Mikro-Oberflächenstruktur: 21
- Vertiefungen: 22
- Kanal: 23
- Bereich von 23: 24
- Öffnung von 23: 25
- Mantelfläche von 5: M1
- Mantelfläche von 7: M2
- Schneidrichtung: SR
- Wirkfuge: W

## Patentansprüche

1. Verfahren zum Schmieren von Werkzeug und Werkstück beim Schneiden und Umformen, insbesondere Feinschneiden eines Werkstücks ab 5 mm Dicke und komplizierter Teilegeometrie aus einem Bandstreifen, bei dem der oberflächenseitig mit einem Schneidölfilm ausreichender Dicke benetzte Bandstreifen zwischen einem aus einem Schneidstempel (5), einer Führungsplatte (4) für den Schneidstempel (5), einer an der Führungsplatte (4) angeordneten Ringzacke (3) und einem Ausstosser (6) zusammengesetzte Oberteil und einem aus Schneidplatte (7), Auswerfer (9) und einem Innenformstempel (8) bestehenden Unterteil beim Schließen eingespannt wird und das Schneidöl durch die Führungsplatte, den Schneidstempel, den Ausstosser, die Schneidplatte, den Auswerfer und den Innenformstempel abgepresst und in durch an die Führungsplatte, den Auswerfer und den Ausstosser angeformte Anfasungen (15, 16) gebildete Öltaschen (14) gedrängt und dort temporär bevorratet wird, und dass eine Menge des bevorrateten Schneidöls über die jeweiligen Wirkfugen (W) an die aktiven Oberflächen am Schneidstempel und Werkstück in der Umformzone transportiert wird,
**dadurch gekennzeichnet, dass** die Schichtdicke des Schneidölfilms auf dem Werkstück durch eine Öl- und Schichtdickenkontrolle in Abhängigkeit von Werkstückdicke, Werkstückmaterial und -geometrie eingestellt wird, wobei eine Menge des bevorrateten Schneidöls von einer in einer Funktionsfläche von Schneidstempel und Schneidplatte eingebrachten Mikro-Oberflächenstruktur (21) gespeichert und im Zusammenwirken aneinander vorbeibewegender Funktionsflächen zu einem quasistationären Schneidölfilm bei geschlossenem Werkzeug gleichmäßig auf den Funktionsflächen verteilt wird, und dass den Wirkfugen (W) über einen im Schneidstempel (5), Auswerfer (9) und Innenformstempel (8) verlaufenden Kanal (23) zusätzlich eine permanent unter Druck stehende Menge an Schneidöl zugeführt wird.

2. Verfahren nach Anspruch 1, **dadurch gekennzeichnet, dass** die Menge des bevorrateten Schneidöls in den Schmiertaschen durch Dimensionierung der Anfasung an der Führungsplatte, Auswerfer und Ausstosser in Abhängigkeit der Werkstückdicke und -geometrie auf die Schmierverhältnisse angepasst wird.

3. Verfahren nach Anspruch 1, **dadurch gekennzeichnet, dass** die zugeführte Menge an Schneidöl in die Umformzone durch die Form, Geometrie und Tiefe der Mikro-Oberflächenstruktur bestimmt wird.

4. Verfahren nach Anspruch 1, **dadurch gekennzeichnet, dass** die zusätzlich zugeführte Menge an Schneidöl in Abhängigkeit der Werkstückdicke durch einen von einer Pumpe erzeugten Druck gesteuert wird.

5. Verfahren nach Anspruch 1, **dadurch gekennzeichnet, dass** die Mikro-Oberflächenstruktur in den Funktionsflächen von Schneid- und Innenformstempel sowie Schneidplatte durch eine Laser-, Schleif- oder Fräsbearbeitung erzeugt wird.

6. Verfahren nach Anspruch 1, **dadurch geknnzeichnet**, dass als Funktionsflächen die Mantelfläche des Schneid- und Innenformstempels sowie die Führungsfläche der Schneidplatte verwendet werden.

7. Verfahren nach Anspruch 1, **gekennzeichnet durch** folgende nacheinander ablaufende Schritte:
a) Abscheren und Entnehmen einer Menge vom Schneidöl aus den Schmiertaschen an der Werkstückoberseite **durch** die Geometrie und Form der Oberflächenstruktur in der Mantelfläche des Schneidstempels während seiner Abwärtsbewegung in Schneidrichtung,
b) Mitnehmen der abgescherten Ölmenge von der Mikro-Oberflächenstruktur in der Mantelfläche des Schneidstempels gemäß Schritt a) und Verteilen der mitgenommenen Ölmenge zu einem quasistationären Ölfilm bis in die Schneid- bzw. Umformzone,
c) Abscheren und Entnehmen einer Menge von Schneidöl aus den Schmiertaschen an der Werkstückunterseite **durch** die Oberflächenstruktur in der Mantelfläche des Auswerfers und
d) Mitnehmen der sbgescherten Schneidölmenge von der Oberflächenstruktur in der Mantelfläche des Auswerfers und Verteilen der mitgenommenen Ölmenge auf die Oberflächenstruktur in der Führungsfläche der Schneidplatte beim Vorbeilaufen der Mantelfläche des Auswerfers an der Führungsfläche der Schneidplatte entgegen der Schneidrichtung.

8. Verfahren nach Anspruch 1, **dadurch gekennzeichnet, dass** als Band ein Band aus Stahl oder Aluminium verwendet wird.

9. Verfahren nach Anspruch 1, **dadurch gekenzeichnet**, dass als Schneidöl ein mit Phosphate, Sulfonate oder ggf. Chlor, versetztes hochviskoses Schmieröl verwendet wird.

10. Vorrichtung zum Schmieren von Werkzeug und Werkstück beim Schneiden und Umformen, insbesondere Feinschneiden eines Werkstücks ab 5 mm Dicke aus einem Bandstreifen, nach Anspruch 1, mit einem zweiteiligen Werkzeug, das mindestens ein Schneidstempel (5), eine Führungsplatte (4) für den Schneidstempel (5), eine an der Führungsplatte angeordnete Ringzacke (3), einen Ausstosser (6), eine Schneidplatte (7), einen Auswerfer (9) und einen Innenformstempel (8) umfasst, wobei das beidseitig mit einem Schneidölfilm ausreichender Dicke benetzte Werkstück zwischen Führungsplatte (4) und Schneidplatte (7) eingespannt und das Schneidöl werkstückoberseitig von durch an der Führungsplatte (4) und Ausstosser (9) sowie werkstückunterseitig durch an der Schneidplatte (7) und Auswerfer (9) angeordnete Anfasungen (15,16) gebildete Öltaschen (14) aufgenommen ist, wobei Wirkfugen (W) zwischen Schneidstempel und Führungsplatte, Schneidplatte und Auswerfer sowie Schneidstempel und Innenformstempel zum Zuführen des Schneidöls vorgesehen sind, **dadurch gekennzeichnet, dass** mindestens die führungsplatte (A), der Schneidstempel (5), die Schneidplatte (7) und der Auswerfer (9) in Ihren Funktionsflächen (17, 18 bzw. 19, 20) eine senkrecht zur Schneidrichtung (SR) gleichmäßig über die Funktionsflächen verteilt angeordnete Mikro-Oberflächenstruktur (21) zur Aufnahme und zum gleichmäßigen Verteilen von Schneidöl über die Wirkfugen (W) bis in die Umformzone in einer quasistationären Schichtdicke und dass in der Führungsplatte (4), im Auswerfer (9) und im Ausstosser (6) ein Kanal (23) mit Austrittsöffnung (25) zum zusätzlich gesteuerten Zuführen von Schneidöl in die Wirkfugen (W) angeordnet ist.

11. Vorrichtung nach Anspruch 10, **dadurch gekennzeichnet, dass** die Mantelflächen von Schneidstempel (5) und Auswerfer (9) als Funktionsfläche (17,18) vorgesehen sind.

12. Vorrichtung nach Anspruch 10, **dadurch gekennzeichnet, dass** die Führungsflächen von Führungsplatte (4) und Schneidplatte (7) als Funktionsfläche (19,20) vorgesehen sind.

13. Vorrichtung nach Anspruch 10, **dadurch gekennzeichnat**, dass die Funktionsflächen von Schneidstempel, Auswerfer, Führungsplatte und Schneidplatte poliert und/oder beschichtet sind.

14. Vorrichtung nach Anspruch 10, **dadurch gekennzeichnet, dass** die Mikro-Oberflächenstruktur (21) aus untereinander nicht in Verbindung stehende rillenförmigen Vertiefungen (22) und/oder langgestreckten Grübchen und/oder Bohrungen gebildet ist, die zumindest einen Teil der Funktionsflächen bedecken.

15. Vorrichtung nach Anspruch 14, **dadurch gekennzeichnet, dass** die Oberflächen der Vertiefungen und/oder Grübchen und/oder Bohrungen poliert und/oder beschichtet sind.

16. Vorrichtung nach Anspruch 14, **dadurch gekennzeichnet, dass** die Vertiefungen und/oder langgestreckten Grübchen und/oder Bohrungen in einem regelmäßigen Muster angeordnet sind, das aus über- oder untereinander angeordneten horizontalen Reihen von Vertiefungen und/oder Grübchen und/oder Bohrungen gebildet ist, wobei die Vertiefungen und/oder Grübchen und/oder Bohrungen gegenüberliegender Reihen auf Lücke zueinander versetzt angeordnet sind.

17. Vorrichtung nach Anspruch 14, **dadurch gekennzeichnet, dass** sich die Vertiefungen und/oder langgestreckte Grübchen unterschiedlicher Reihen sich gegenseitig überlappen.

18. Vorrichtung nach Anspruch 14, **dadurch gekennzeichnet, dass** die Vertiefungen und/oder Grübchen und/oder Bohrungen eine Tiefe von 0,03 bis 0,05 mm aufweisen.

19. Vorrichtung nach Anspruch 18, **dadurch gekennzeichnet, dass** die Größe der Anfasung an der Führungsplatte, dem Auswerfer und dem Ausstosser nach der Werkstückdicke bemessen ist.

20. Vorrichtung nach Anspruch 10, **dadurch gekennzeichnet, dass** der Kanal (23) mit einem unter Druck gehaltenen Schneidölreservoir verbunden ist.

## Claims

1. Method for lubricating tool and workpiece at cutting and forming, especially fine blanking of a workpiece with a thickness of 5 mm or more and with complex part geometry from a flat strip, wherein the flat strip wetted on the surface with a cutting oil film of sufficient thickness at closing is clamped between an upper part consisting of a shearing punch (5), a guide plate (4) for the shearing punch (5), a V-shaped projection (3) positioned on the guide plate (4) and an ejector (6) and a lower part consisting of cutting die (7), ejector (9) and a inner form punch (8), and the cutting oil by the guide plate, the shearing punch, the ejector (6), the cutting die, the ejector (9) and the inner form punch is pressed out and forced into chamfers (15,16) at the guide plate and the ejectors forming lubrication bore reliefs (14), in which it is temporarily stocked up, and that one quantity of accumulated cutting oil via the respective effective gaps (W) is provided to the active surfaces of shearing punch and workpiece in the forming zone. **characterized in that** the layer thickness of the cutting oil film on the workpiece by an oil and layer thickness control is adjusted in dependence on the thickness of the workpiece, material of the workpiece and workpiece geometry whereby from the stocked up cutting oil one quantity is accumulated in a micro-surface structure (21) of a functional surface of shearing punch and cutting die and evenly distributed on the functional surfaces as quasi-stationary cutting oil film by cooperation of moving past each other functional surfaces, when the tool is closed, and the effective gaps (W) are permanently provided with an additional quantity of fine blanking oil under controllable pressure via a conduit (23) extending in the shearing punch (5), the ejector(9) and the inner form punch (8).

2. Method according to claim 1, **characterized in that** the quantity of accumulated cutting oil in the lubrication bore reliefs by dimensioning the chamfers at pressure die and ejectors in dependence on the workpiece thickness and geometry is adjusted to the lubrication situation.

3. Method according to claim 1, **characterized in that** the quantity of cutting oil provided to the forming zone is determined by shape, geometry and depth of the micro-surface structure.

4. Method according to claim 1, **characterized in that** the additionally provided quantity of cutting oil is controlled in dependence on the thickness of the workpiece by a pressure produced by a pump.

5. Method according to claims 1, **characterized in that** the micro-surface structure of the functional surfaces of shearing and inner form punches as well as of the cutting die is fabricated by laser beam, grinding or milling machining.

6. Method according to claim 1, **characterized in that** the convex surfaces of the shearing and the inner form punches as well as the guiding surface of the cutting die are used as functional surfaces.

7. Method according to claim 1, **characterized by** following successively executed steps:
a) shearing off and removing a quantity of cutting oil from the lubrication bore reliefs on the upper side of the workpiece due to geometry and shape of the surface structure of the convex surface of the shearing punch during its down movement in cutting direction,
b) carrying on the sheared off quantity of oil from the micro-surface structure of the convex surface of the shearing punch according to step a) and distributing the carried on quantity of oil as quasi-stationary oil film up to the cutting or forming zone,
c) shearing off and removing a quantity of cutting oil from the lubrication bore reliefs on the lower side of the workpiece due to the surface structure of the convex surface of the ejector and
d) carrying on the sheared off quantity of cutting oil from the surface structure of the convex surface of the ejector and distributing the carried on quantity of oil on the surface structure of the guiding surface of the cutting die when the convex surface of the ejector passes the guiding surface of the cutting die against the cutting direction

8. Method according to claims 1, **characterized in that** as strip is used a strip made of steel or aluminum.

9. Method according to claims 1, **characterized in that** as cutting oil is used a mixed with phosphates, sulfonates or if necessary chlorine high viscous lubrication oil.

10. Device for lubricating tool and workpiece at cutting and forming, especially fine blanking of a workpiece with a thickness of 5 mm and more from a strip according to claim 1 with a tool consisting of two parts with at least one shearing punch (5), one guide plate (4) for the shearing punch (5), one positioned on the pressure pad V-shaped projection (3), one ejector (6), one cutting die (7), one ejector (9) and an inner form punch (8), wherein the flat strip wetted on both sides with a cutting oil film of sufficient thickness is clamped between guide plate (4) and cutting die (7) and the cutting oil on the upper and lower sides of the workpiece is collected in chamfers (15, 16) positioned at the guide plate (4) and the ejector (6) and at the cutting die (7) and the ejector (9) forming lubrication bore reliefs (14), wherein effective gaps (W) between shearing punch and guide plate, cutting die and ejector and shearing punch and inner form punch are provided to supply the cutting oil, **characterized in that** at least the guide plate (4), shearing punch (5) and the cutting die (7) on their functional surfaces (17, 18 or 19, 20) have a perpendicularly to the cutting direction (SR) arranged regularly distributed over the functional surfaces micro-surface structure (21) for receiving and evenly distributing cutting oil in a quasi-stationary layer thickness via the effective gaps (W) up to the forming zone, and in the guiding plate (4), in the ejector (9) and in the ejector (6) is arranged a conduit (23) with outlet opening (25) for the additional controlled supply of cutting oil into the effective gaps (W).

11. Device according to claims 10, **characterized in that** the convex surfaces of shearing punch (5) and ejector (9) are provided as functional surfaces (17, 18).

12. Device according to claims 10, **characterized in that** the guiding surfaces of guide plate (4) and cutting die (7) are provided as functional surfaces (19, 20).

13. Device according to claims 10, **characterized in that** the functional surfaces of shearing punch ejector, guide plate and cutting die are polished and/or coated.

14. Device according to claims 10, **characterized in that** the micro-surface structure (21) is formed of not connected to each other groove-shaped indentations (22) and/or longish pits and/or bore holes, which at least cover a part of the functional surfaces.

15. Device according to claim 14, **characterized in that** the surfaces of the indentations and/or pits and/or bore holes are polished and/or coated.

16. Device according to claim 14, **characterized in that** the indentations and/or pits and/or bore holes are arranged in a regular pattern which is formed of above or beneath each other arranged horizontal rows of indentations and/or pits and/or bore holes, wherein the indentations and/or pits and/or bore holes of opposite rows are arranged in a staggered manner to each other.

17. Device according to claim 14, **characterized in that** the indentations and/or longish pits of different rows overlap each other.

18. Device according to claim 14, **characterized in that** the indentations and/or pits and/or bore holes have a depth of 0.03 to 0.05 mm.

19. Device according to claim 18, **characterized in that** the size of the chamfers at the guide plate and the ejectors is dimensioned according to the thickness of the workpiece.

20. Device according to claim 10, **characterized in that** the conduit (23) is connected to a cutting oil reservoir hold under pressure.

## Revendications

1. Procédé pour la lubrification de l'outil et de la pièce lors de la coupe et du formage, en particulier coupe fine d'une pièce à partir de 5 mm d'épaisseur et de géométrie de pièce compliquée dans une bande droite, dans lequel la bande droite mouillée côté surface avec une pellicule d'huile de coupe d'épaisseur suffisante est insérée entre une partie supérieure comprenant un poinçon de coupe (5), une plaque de guidage (4) pour le poinçon de coupe (5), un anneau de retenue (3) disposé sur la plaque de guidage (4) et un expulseur (6) et une partie inférieure comprenant la plaque de coupe (7), l'éjecteur (9) et un poinçon de formage intérieur (8) lors de la fermeture et l'huile de coupe est comprimée par la plaque de guidage, le poinçon de coupe, l'expulseur, la plaque de coupe, l'éjecteur et le poinçon de formage intérieur et est refoulée dans des poches d'huile (14) formées par des chanfreins (15, 16) formés sur la plaque de guidage, l'éjecteur et l'expulseur et y est approvisionnée de façon temporaire, et en ce qu'une quantité de l'huile de coupe approvisionnée est transportée par les joints actifs (W) respectifs sur les surfaces actives sur le poinçon de coupe et la pièce dans la zone de formage, **caractérisé en ce que** l'épaisseur de couche de la pellicule d'huile de coupe sur la pièce est réglée par un contrôle de l'huile et de l'épaisseur de couche en fonction de l'épaisseur de pièce, du matériau et de la géométrie de pièce, une quantité de l'huile de coupe approvisionnée étant stockée par une structure de microsurface (21) introduite dans une surface fonctionnelle du poinçon de coupe et de la plaque de coupe et étant répartie uniformément sur les surfaces fonctionnelles en action conjuguée de surfaces fonctionnelles se déplaçant les unes devant les autres pour former une pellicule d'huile de coupe quasi stationnaire lorsque l'outil est fermé, et **en ce qu'**en supplément une quantité d'huile de coupe mise sous pression de façon permanente est amenée aux joints actifs (W) au moyen d'un canal (23) agencé dans le poinçon de coupe (5), l'éjecteur (9) et le poinçon de formage intérieur (8).

2. Procédé selon la revendication 1, **caractérisé en ce que** la quantité de l'huile de coupe approvisionnée dans les poches de lubrification est adaptée par le dimensionnement du chanfrein sur la plaque de guidage, l'éjecteur et l'expulseur en fonction de l'épaisseur et de la géométrie de pièce sur les conditions de lubrification.

3. Procédé selon la revendication 1, **caractérisé en ce que** la quantité amenée d'huile de coupe dans la zone de formage est déterminée par la forme, la géométrie et la profondeur de la microstructure de surface.

4. Procédé selon la revendication 1, **caractérisé en ce que** la quantité d'huile de coupe amenée en supplément est commandée en fonction de l'épaisseur de pièce par une pression générée par une pompe.

5. Procédé selon la revendication 1, **caractérisé en ce que** la structure de microsurface dans les surfaces fonctionnelles du poinçon de coupe et du poinçon de formage intérieur ainsi que de la plaque de coupe est générée par un usinage au laser, un usinage par rectification ou un usinage par fraisage.

6. Procédé selon la revendication 1, **caractérisé en ce que**, comme surfaces fonctionnelles, la surface d'enveloppe du poinçon de coupe et du poinçon de formage intérieur ainsi que la surface de guidage de la plaque de coupe sont utilisées.

7. Procédé selon la revendication 1, **caractérisé par** le déroulement des étapes suivantes :
a) détachement et prélèvement d'une quantité d'huile de coupe sur les poches d'huile sur le côté supérieur de pièce par la géométrie et la forme de la structure de surface dans la surface d'enveloppe du poinçon de coupe pendant son mouvement descendant dans le sens de coupe,
b) entraînement de la quantité d'huile détachée de la microstructure de surface dans la surface d'enveloppe du poinçon de coupe selon l'étape a) et répartition de la quantité d'huile entraînée pour former une pellicule d'huile quasi stationnaire jusqu'à la zone de coupe et/ou la zone de formage,
c) détachement et enlèvement d'une quantité d'huile de coupe des poches de lubrification sur le côté inférieur de la pièce par la structure de surface dans la surface d'enveloppe de l'éjecteur et
d) entraînement de la quantité d'huile de coupe détachée de la structure de surface dans la surface d'enveloppe de l'éjecteur et répartition de la quantité d'huile entraînée sur la structure de surface dans la surface de guidage de la plaque de coupe lors du passage de la surface d'enveloppe de l'éjecteur devant la surface de guidage de la plaque de coupe dans le sens contraire au sens de coupe.

8. Procédé selon la revendication 1, **caractérisé en ce que**, comme bande, on utilise une bande à base d'acier ou d'aluminium.

9. Procédé selon la revendication 1, **caractérisé en ce que**, comme huile de coupe, on utilise une huile de lubrification très visqueuse mélangée avec des phosphates, des sulfonates ou éventuellement du chlore.

10. Dispositif pour la lubrification de l'outil et de la pièce lors de la coupe et du formage, en particulier coupe fine d'une pièce à partir de 5 mm d'épaisseur dans une bande plate, selon la revendication 1, comprenant un outil en deux parties, qui comprend au moins un poinçon de coupe (5), une plaque de guidage (4) pour le poinçon de coupe (5), un anneau de retenue (3) disposé sur la plaque de guidage, un expulseur (6), une plaque de coupe (7), un éjecteur (9) et un poinçon de formage intérieur (8), la pièce mouillée des deux côtés avec une pellicule d'huile de coupe d'épaisseur suffisante étant insérée entre la plaque de guidage (4) et la plaque de coupe (7) et l'huile de coupe étant réceptionnée par des poches d'huile (14) formées côté supérieur de la pièce par des chanfreins (15, 16) disposés sur la plaque de guidage (4) et l'expulseur (6) ainsi que côté inférieur de la pièce par des chanfreins (15, 16) disposés sur la plaque de coupe (7) et l'éjecteur (9), des joints actifs (W) étant prévus entre le poinçon de coupe et la plaque de guidage, la plaque de coupe et l'éjecteur ainsi que le poinçon de coupe et le poinçon de formage intérieur pour l'arrivée de l'huile de coupe étant prévus, **caractérisé en ce qu'**au moins la plaque de guidage (4), le poinçon de coupe (5), la plaque de coupe (7) et l'éjecteur (9) présentent dans leurs surfaces fonctionnelles (17, 18 ou 19, 20) une microstructure de surface (21) disposée et répartie perpendiculairement au sens de coupe (SR) de façon uniforme sur les surfaces fonctionnelles pour la réception et pour la répartition uniforme d'huile de coupe via les joints actifs (W) jusque dans la zone de formage dans une épaisseur de couche quasi stationnaire et **en ce que** dans la plaque de guidage (4), dans l'éjecteur (9) et dans l'expulseur (6) est disposé un canal (23) avec ouverture de sortie (25) pour l'arrivée commandée en supplément d'huile de coupe dans les joints actifs (W).

11. Dispositif selon la revendication 10, **caractérisé en ce que** les surfaces d'enveloppe du poinçon de coupe (5) et de l'éjecteur (9) sont prévues comme surface fonctionnelles (17, 18).

12. Dispositif selon la revendication 10, **caractérisé en ce que** les surfaces de guidage de la plaque de guidage (4) et de la plaque de coupe (7) sont prévues comme surface fonctionnelles (19, 20).

13. Dispositif selon la revendication 10, **caractérisé en ce que** les surfaces fonctionnelles du poinçon de coupe, de l'éjecteur, de la plaque de guidage et de la plaque de coupe sont polies et/ou revêtues.

14. Dispositif selon la revendication 10, **caractérisé en ce que** la microstructure de surface (21) est formée de renfoncements (22) en forme de rainure, non en contact entre elles, et/ou de petites cavitées étirées en longueur et/ou des alésages, qui couvrent au moins une partie des surfaces fonctionnelles.

15. Dispositif selon la revendication 14, **caractérisé en ce que** les surfaces des renfoncements et/ou petites cavitées et/ou alésages sont polies et/ou revêtues.

16. Dispositif selon la revendication 14, **caractérisé en ce que** les renfoncements et/ou petites cavitées étirées en longueur et/ou alésages sont disposés dans un modèle régulier, qui est formé de rangées horizontales, disposées les unes au-dessus des autres ou les unes au-dessous des autres, de renfoncements et/ou de petites cavitées et/ou d'alésages, les renfoncements et/ou petites cavitées et/ou alésages de rangées opposées étant disposés de façon décalée avec un vide les uns par rapport aux autres.

17. Dispositif selon la revendication 14, **caractérisé en ce que** les renfoncements et/ou petites cavitées étirées en longueur de rangées différentes se chevauchent réciproquement.

18. Dispositif selon la revendication 14, **caractérisé en ce que** les renfoncements et/ou petites cavitées et/ou alésages présentent une profondeur de 0,03 à 0,05 mm.

19. Dispositif selon la revendication 18, **caractérisé en ce que** la grandeur du chanfrein sur la plaque de guidage, l'éjecteur et l'expulseur est dimensionnée en fonction de l'épaisseur de la pièce.

20. Dispositif selon la revendication 10, **caractérisé en ce que** le canal (23) est relié à un réservoir d'huile de coupe maintenu sous pression.
